## Europäisches Patentamt
## European Patent Office
## Office européen des brevets

(19)

(11) Veröffentlichungsnummer: **0 264 993 B1**

(12) # EUROPÄISCHE PATENTSCHRIFT

(45) Veröffentlichungstag der Patentschrift: **02.01.92**

(51) Int. Cl.5: **B01D 61/40**, C01G 17/00, C01G 28/00, B01D 17/06

(21) Anmeldenummer: **87201878.3**

(22) Anmeldetag: **01.10.87**

(54) **Verfahren zur selektiven Gewinnung von Germanium und/oder Arsen aus wässrigen Lösungen.**

(30) Priorität: **18.10.86 DE 3635450**

(43) Veröffentlichungstag der Anmeldung:
**27.04.88 Patentblatt 88/17**

(45) Bekanntmachung des Hinweises auf die Patenterteilung:
**02.01.92 Patentblatt 92/01**

(84) Benannte Vertragsstaaten:
**AT BE CH DE ES FR GB IT LI LU NL SE**

(56) Entgegenhaltungen:
EP-A- 0 072 628      EP-A- 0 083 272
EP-A- 0 088 002      EP-A- 0 140 088
DE-A- 2 829 163      DE-A- 3 318 109
US-A- 3 779 907      US-A- 4 409 078

(73) Patentinhaber: **METALLGESELLSCHAFT AG**
**Reuterweg 14 Postfach 3724**
**W-6000 Frankturt/M.1(DE)**

(72) Erfinder: **Schügerl, Karl, Prof. Dr.**
**Arnumer Kirchstrasse 31**
**W-3005 Hemmingen 4(DE)**
Erfinder: **Gutknecht, Wilfried**
**Redenstrasse 5**
**W-3000 Hannover 1(DE)**

(74) Vertreter: **Rieger, Harald, Dr. et al**
**Reuterweg 14**
**W-6000 Frankturt a.M.(DE)**

## Beschreibung

Die Erfindung betrifft ein Verfahren zur Gewinnung von Germanium und/oder Arsen aus wäßrigen salzsauren Lösungen durch sogenannte "Flüssigmembran"-Technik.

Mit der ständig fortschreitenden Entwicklung der Lichtleitertechnik entsteht ein zunehmender Bedarf an Germanium wie auch an Arsen. Germaniumreiche Rohstoffe stehen nur in begrenztem Umfang zur Verfügung, so daß auch an Germanium geringhaltige Rohstoffe aufgearbeitet werden müssen. Bei der Laugung dieser Rohstoffe fallen Lösungen an, die neben geringen Mengen Germanium erhebliche Mengen anderer Metalle enthalten.

Zur Abtrennung und Anreicherung des Germaniums werden bisher unterschiedliche Verfahrenswege beschritten, wie Fällung mit Tannin und anschließende Aufarbeitung, Extraktion/Reextraktion und Ionenaustauschverfahren. Die Fällung ist sehr kostenintensiv und zudem sehr abhängig von dem als Naturprodukt unterschiedlicher Qualität verwendeten Tannin. Bei dem Extraktions-/Reextraktionsverfahren muß die organische Phase vor dem erneuten Einsatz zwischenbehandelt werden, und bei den Ionenaustauschverfahren mittels Säulen ist eine Regenerierung der Tauschersäulen erforderlich.

Aus US-A-3 779 907 ist es bekannt, in wäßrigen Systemen gelöste Stoffe mittels der Flüssigmembran-Technik zu extrahieren und auf den Wertstoff aufzuarbeiten. Gemäß dem vorbekannten Verfahren wird ein in wäßrigem Medium gelöster Stoff durch Inberührungbringen der Lösung mit einer Wasser-in-Öl-Emulsion entfernt. Die Wasser-in-Öl-Emulsion besteht aus einer inneren wäßrigen Phase, die den gelösten Stoff in einen nicht durchdringungsfähigen Stoffzustand überführt, und aus einer umgebenden äußeren organischen hydrophoben Phase, die ein oberflächenaktives Mittel enthält. Auf diese Weise wird ein Konzentrationsgradient erzeugt und der gelöste Stoff durchdringt die äußere Phase und wird in der inneren Phase in einen nicht durchdringungsfähigen Stoff umgewandelt. Nach dieser Berührung wird die Emulsion dann von der wäßrigen, an dem gelösten Stoff verarmten Lösung getrennt, und die Emulsion kann danach regeneriert werden. Ein Verfahren zur Regenerierung der Emulsion besteht darin, die Emulsion zu brechen.

Werden dem Lösungsmittel bestimmte Reagenzien zugesetzt, so wird die organische Phase für Substrate durchlässig. Durch die Wahl der Reagenzien und der Lösungsmittel kann die Durchlässigkeit selektiv werden.

Gemäß dem aus DE-A-28 29 163 bekannten Verfahren zur Gewinnung gelöster Stoffe aus deren wäßriger Lösung mittels Flüssigmembran-Technik wird die abgetrennte Emulsion zwecks Koaleszenz (Brechung) der Tropfen der wäßrigen inneren Phase einem elektrostatischen Feld ausgesetzt. Dabei übersteigt der Spannungsgradient in der elektrostatischen Koaleszenzzone wenigstens etwa 1 kV/cm.

Für die organische Phase der Flüssigmembran-Emulsion wird eine Vielzahl von mit Wasser nicht mischbaren Lösungsmitteln vorgeschlagen, die auch ein oberflächenaktives Mittel, wie Sorbitmonolaurinsäureester, enthalten. Nach dem vorbekannten Verfahren können sowohl anionische als auch kationische Stoff extrahiert werden. Unter letzteren sind Germanium und Arsen nicht offenbart und auch nicht in Betracht gezogen.

Auch das aus DE-A-33 18 109 vorbekannte Verfahren zur Gewinnung von Zink aus heterogen zusammengesetztem Abwasser sieht eine Extraktion mit Flüssigmembran-Emulsion vor. Dabei wird als innere wäßrige Phase der Flüssigmembran-Emulsion eine wäßrige 1 N- bis 6 N-Mineralsäure und vorzugsweise Schwefelsäure eingesetzt und als Tensid Sorbitmonolaurinsäureester sowie als Transportmittel z.B. eine organische Phosphorverbindung, wie bis-(2-äthylhexyl)phosphorsäureester der Membranphase, zugesetzt.

Der Erfindung liegt die Aufgabe zugrunde, ein kontinuierlich zu betreibendes, kostengünstiges Verfahren zu entwickeln, mit dem Germanium oder Arsen oder Germanium neben Arsen einerseits selektiv aus verdünnten Lösungen gewonnen und angereichert werden können and andererseits Germanium und/oder Arsen nach der Gewinnung in einer genügend reinen Form vorliegen, die leicht weiterverarbeitet werden kann.

Zur Lösung der Aufgabe geht die Erfindung aus von einem Verfahren der "Flüssigmembran-Technik", wobei man die wäßrige Lösung des zu gewinnenden Stoffes mit einer Emulsion in Berührung bringt, deren Tröpfchen aus wäßriger innerer Phase von einer mit der wäßrigen Lösung nicht mischbaren, für den gelösten Stoff durchlässigen tensidhaltigen, organischen äußeren Phase umgeben sind, den gelösten Stoff durch die organische, tensidhaltige äußere Phase hindurchdringen läßt und in der wäßrigen inneren Phase undurchdringungsfähig macht, die Emulsion von der an gelöstem Stoff verarmten wäßrigen Lösung abtrennt, die Tröpfchen der wäßrigen inneren Phase in der abgetrennten Emulsion durch Anlegen eines elektrostatischen Feldes koalesziert, aus der koaleszierten wäßrigen inneren Phase den gelösten Stoff gewinnt un die verarmte innere Phase mit äußerer Phase reemulgiert und zurückführt.

Das Verfahren der Flüssigmembran-Technik wird gemäß dem Verfahren der Erfindung in der Weise ausgestaltet, daß

a) eine Germanium und/oder Arsen sowie gegebenenfalls noch weitere Metalle enthaltende wäßrige Lösung mit Salzsäure auf eine Konzentration von mehr als 6 und vorzugsweise bis 10 mol HCl/l eingestellt und die Metalle in Germaniumtetrachlorid und Arsentrichlorid überführt werden,

b) eine äußere organische Lösungsmittelphase der Flüssigmembran-Emulsion eingesetzt wird, die als Tensid ein Polyisobutylenbernsteinsäureanhydrid/Polyamin-Kondensationsprodukt enthält, und

c) die innere wäßrige Phase der Flüssigmembran-Emulsion auf einen pH-Wert von 0 bis 14 eingestellt und das eindringende Germaniumtetrachlorid und/oder Arsentrichlorid undurchdringungsfähig gemacht wird unter der Maßgabe, daß die Zufuhr von Chlorionen ausgeschlossen wird.

Mit dem Verfahren der vorliegenden Erfindung gelingt es nicht nur, eine rasche selektive Extraktion der Germanium-und/oder Arsenwertstoffe aus hochverdünnten Lösungen herbeizuführen, sondern auch unter Verwendung einer relativ geringen Menge an Extraktionsphase eine praktisch vollständige Extraktion des Wertstoffs zu erzielen, und ferner aufgrund der Zusammensetzung der organischen Membranphase nach Art und Menge der Komponenten eine gute Brechung in Öl- und Wasserphase zu bewirken.

Nach einer weitern Ausgestaltung der Erfindung kann statt Salzsäure auch Bromwasserstoffsäure eingesetzt und die entsprechende Konzentration in der wäßrigen Ausgangslösung eingestellt werden. In diesem Falle bilden sich die Bromide des Ge $^{IV}$ bzw. As $^{III}$.

Zur Durchführung des erfindungsgemäßen Verfahrens werden verdünnte wäßrige Metallsalzlösungen, die etwa 50 bis 100 ppm Germanium und/oder Arsen neben erheblichen Mengen, wie etwa 20 g/l Kupfer und 10 g/l Zink sowie etwa 10 g/l Eisen, enthalten, mit Salzsäure auf eine Konzentration von etwa 6- bis 10-facher Normalität eingestellt. Hierbei werden Germanium und Arsen in ihre Chloride übergeführt. Durch die Bildung der Chloride des GE $^{IV}$ und des As $^{III}$ wird eine lösungsmittellösliche Form des Germaniums und Arsens erreicht. Um die Chloride des Germaniums und/oder Arsens aus der salzsauren wäßrigen Ausgangslösung selektiv zu extrahieren und zu entfernen, wird gemäß dem Verfahren der Erfindung als organische äußere Phase der Flüssigmembran-Emulsion ein mit Wasser nicht mischbares, organisches flüssiges Lösungsmittel oder Lösungsmittelgemisch verwendet aus der Gruppe gesättigte aliphatische Kohlenwasserstoffe, aromatische und cycloaliphatische Kohlenwasserstoffe, halogenierte Kohlenwasserstoffe mit 1 bis 5 Kohlenstoffatome, flüssige halogenierte einkernige aromatische Kohlenwasserstoffe. Als gesättigte aliphatische Kohlenwasserstoffe eignen sich beispielsweise Hexan, Oktan, Dodecan, Hexadecan, Eicosan, Kerosin, Bevorzugte aromatische und cycloaliphatische Kohlenwasserstoffe sind beispielsweise Benzol, Toluol, Xylol, Dekalin, Cyclohexan. Unter den halogenierten aliphatischen Kohlenwasserstoffen mit 1 bis 5 C-Atomen eignen sich besonders Chloroform, Tetrachlorkohlenstoff, Tetrachloräthan. Aus der Gruppe der flüssigen halogenierten einkernigen aromatischen Kohlenwasserstoffe wird Chlorbenzol oder Chlortoluol bevorzugt. Die Lösungsmittel können einzeln oder im Gemisch zur Bereitung der organischen Membranphase verwendet werden. Vorzugsweise wird als organische Membranphase ein Lösungsmittelgemisch aus einem aliphatischen, überwiegend geradkettigen Kohlenwasserstoff mit 16 bis 20 C-Atome, einem halogenierten Kohlenwasserstoff mit 1 bis 5 C-Atomen und einem einkernigen aromatischen Kohlenwasserstoff verwendet.

Eine geeignet zusammengesetzte organische Membranflüssigkeit zur Durchführung des Verfahrens der Erfindung ist beispielsweise ein Lösungsmittelgemisch aus

70 bis 75 Vol.-%

eines geradkettigen, aliphatischen Kohlenwasserstoffs mit 16 bis 20 C-Atomen, wie Hexadecan, Eicosan, Kerosin und vorzugsweise Kerosin,

20 bis 25 Vol.-%

eines aromatischen einkernigen Kohlenwasserstoffs, wie Benzol, Toluol, Xylol und vorzugsweise Toluol,

1 bis 5 Vol.-%

halogenierter aliphatischer Kohlenwasserstoff mit 1 bis 5 C-Atomen, wie Chloroform, Tetrachlorkohlenstoff, Tetrachloräthan und vorzugsweise Tetrachlorkohlenstoff.

Um die Herstellung einer beständigen Flüssigmembran-Emulsion zu ermöglichen, ist in an sich bekannter Weise die Anwesenheit eines oberflächenaktiven Mittels in der Membranflüssigkeit erforderlich. Für das Verfahren der Erfindung hat sich als besonders geeignet ein Tensid auf Basis eines Kondensationsproduktes aus PIBSA (Polyisobutylenbernsteinsäureanhydrid) und Polyamin erwiesen. Ein derartiges Produkt ist handelsüblich und beispielsweise unter dem Warenzeichen Paranox® 100 der Esso Chemical erhältlich. Das Tensid ist in einer Menge von mehr als 0,1 und vorzugsweise 0,5 bis 5 Gew.-%, bezogen auf das Gewicht des Lösungsmittelgemischs, in diesem enthalten. Mit dem erfindungsgemäß verwendeten oberflächenaktiven Mittel gelingt es, eine Wasser-in-Öl-Emulsion herzustellen, die für die Extraktion von Germanium und/oder Arsen aus stark sauren wäßrigen Lösungen im kontinuierlichen Verfahren ausreichend mechanisch stabil ist und auch gegenüber der Einstellmöglichkeit eines weiten pH-Bereiches von 0 bis 14 für die innere Phase chemisch völlig stabil ist, d.h. es kann beispielsweise eine stark alkalische innere Phase mit der stark salzsauren Lösung des zu extrahierenden Metalls ohne Brechen der Em ulsion und ohne Neutralisationseffekte in Kontakt gebracht werden.

Für die Einstellung des pH-Werts der inneren Phase im sauren Bereich werden übliche Säuren, vorzugsweise Mineralsäuren, verwendet, ausgenommen Salzsäure, da letztere die Rückbildung des Germaniumtetrachlorids und Arsentrichlorids herbeiführt. Zur Einstellung des alkalischen Bereiches eignen sich Basen, wie Alkali-oder Erdalkalimetallhydroxide, während Neutralwerte sich durch alleinige Verwendung von destilliertem Wasser ergeben. In der inneren Phase hydrolysieren das Germaniumtetrachlorid wie auch das Arsentrichlorid und werden auf diese Weise für die organische Phase undurchdringungsfähig gemacht (keine Rückwanderung). Somit bleibt stets ein Konzentrationsgradient aufrechterhalten.

Im Verfahren der Erfindung wird ein Volumenverhältnis von Beschickungslösung, das heißt Germanium und/oder Arsen enthaltender salzsaurer wäßriger Lösung, zu Flüssigmembran-Emulsion eingestellt von 10 : 1 bis 1000 : 1. Bei einer Arbeitsweise mit hohem Verhältnis von Beschickungslösung zu Flüssigmembran-Emulsion erhöht sich jedoch die Dauer des Extraktionsvorgangs. Eine bevorzugte Ausführungsform der Erfindung sieht daher ein Verhältnis von 60 : 1 bis 500 : 1 vor. Hieraus ist ersichtlich, daß das Verfahren der Erfindung dann besonders wirtschaftlich arbeitet, wenn eine große Menge Beschickungslösung mit einer möglichst kleinen Menge Flüssigmembran-Emulsion in möglichst kurzer Zeit behandelt und selektiv extrahiert werden kann. Im allgemeinen liegt die Behandlungszeit bei 1 bis 5 min.

Ebenso ist es für die Wirtschaftlichkeit des Verfahrens der Erfindung von Bedeutung, daß das Volumenverhältnis von äußerer organischer Phase zu innerer wäßriger Phase der Flüssigmembran-Emulsion möglichst kleingehalten wird. In einem Bereich eines Volumenverhältnisses von 10 : 1 bis 1 : 10 hat der Bereich von 3 : 1 bis 1 : 2 eine bevorzugte Anwendung.

Die Behandlung der Beschickungslösung mit der Flüssigmembran-Emulsion erfolgt in Vorrichtungen bzw. Extraktoren an sich bekannter Bauart, wie pulsierte Siebbodenkolonne, Karr-Kolonne, Kühni-Kolonne, Mixer-Settler. Nach einer Behandlungszeit von üblicherweise maximal 5 min wird die Disperison der Flüssigmembran-Emulsion in der praktisch germanium-und/oder arsenfreien Ausgangslösung in einen konventionellen Absetzbehälter überführt und die verarmte wäßrige Ausgangslösung abgetrennt. Die Flüssigmembran-Emulsion, deren wäßrige innere Phase nunmehr praktisch das gesamte Germanium und/oder Arsen enthält, wird sodann durch Anlegen eines elektrischen Feldes zwischen zwei außerhalb der Emulsion isoliert angeordneten Elektroden gebrochen. Hierbei wird ein Spannungsgradient von größer als 0,2 kV/cm vorgesehen und eine Frequenz von 50 bis 1000 Hz bei einer Spannung von 1 bis 20 kV eingestellt. Geeignete Brechungsbedingungen werden beispielsweise bei 3 kV und 1000 Hz oder 16 kV und 50 Hz eingestellt.

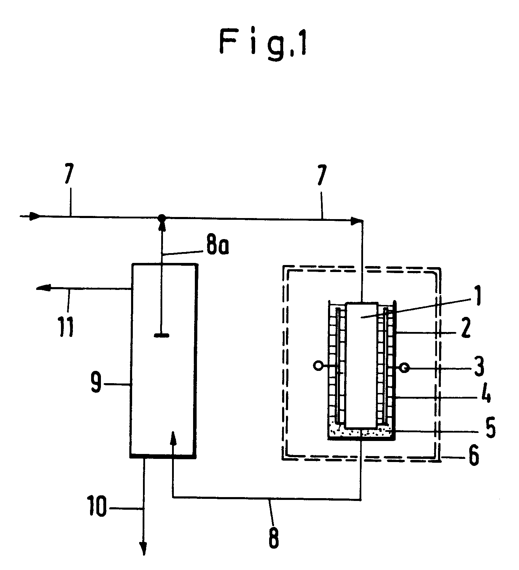

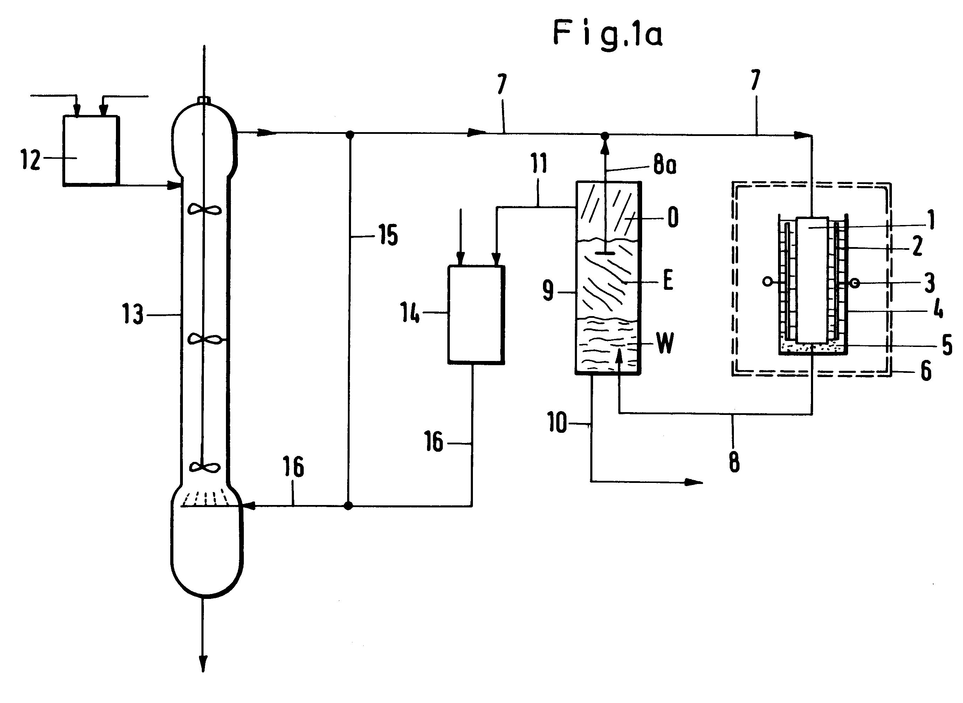

Eine geeignete Vorrichtung zur Durchführung der Koaleszenz in angereicherten, Germanium und/oder Arsen enthaltenden wäßrigen Lösungen gemäß dem Verfahren der Erfindung sieht gemäß Figur 1 eine Emulsionsbrechungseinheit vor aus Brechungszelle (1) mit zwei an gegenüberliegenden Seiten außerhalb und im Bereich der Zellenwände angeordneten Elektroden (2) sowie Anschlußorganen (3) für elektrische Energie, wobei Elektroden (2) und Brechungszelle (1) in einem mit isolierendem Medium (5) angefüllten Behälter (4) angeordnet und von einem Faraday-Käfig (6) umgeben sind, Zuleitung (7) für den Emulsionszufluß in die Brechungszelle (1) und Abflußleitung (8) für Entnahme der Koaleszierten Flüssigkeit und Überführung in einen Absetzbehälter (9), Entnahmeleitung (10) für metallreiche wäßrige Phase, Entnahmeleitung (11) für organische Membranphase sowie Rezirkulation (8a) nicht koaleszierter Emulsion aus dem Absetzbehälter (9) in die Brechungszelle (1).

Als Werkstoff für die Brechungszelle wird ein elektrisch nichtleitendes Material, wie z.B. Kunststoff, Glas oder Keramik, v erwendet. In der Brechungszelle (1) wird die Emulsion gebrochen, aber die entstehenden Phasen bleiben noch grob durchmischt. Die vollständige Trennung erfolgt dann in dem Absetzgefäß (9).

Die Brechungszelle (1) ist in zweckmäßig flüssiges Isoliermaterial (5), beispielsweise Transformatoröl, eingebettet, welches in dem Isoliergefäß (4) enthalten ist. Die Elektroden (2) der Spannungsversorgung (3) sind ebenfalls in das flüssige Isoliermaterial eingebettet und werden dicht an die Außenwand der Brechungszelle herangeführt. Im Absetzgefäß (9) werden gemäß Figur 1a im Betrieb praktisch drei Flüssigkeitsschichten gebildet: eine untere spezifisch schwerste wäßrige Schicht (W) mit den darin angereicherten Elementen Germanium und/oder Arsen, eine mittlere Schicht aus Flüssigmembran-Emulsion (E) und eine obere Schicht aus organischer Phase (O). Über den Kreislauf Brechungszelle (1), Leitung (8), Absetzgefäß (9), Leitungen (8a) und (7) ist die Möglichkeit gegeben, nicht oder nur unvollständig gebrochene Emulsion (E) kontinuierlich wieder in die Brechungszelle einzuführen. Die innere wäßrige Phase (W), das heißt die wäßrige, das angereicherte Germanium und/oder Arsen enthaltende Schicht, wird dem Absetzgefäß (9) mittels Schwerkraft oder Pumpe entnommen und einer konventionellen Weiterverarbeitung zugeführt, beispielsweise einer Aufarbeitung zum Oxid. Die organische Phase (O) wird aus dem Absetzgefäß (9) durch Leitung (11) abgezogen und ggf. mit ergänztem organischem Lösungsmittel und neuer wäßriger innerer Phase im Emulgiergefäß (14) emulgiert und über Leitung (16) in den Extraktor (13) zurückgeführt. In (12) erfolgt die Einstellung der HCl-Konzentration in der wäßrigen Ausgangslösung, welche die zu gewinnenden Stoffe enthält. Eine beliebige Kreislaufführung ist mittels der Verbindungsleitung (15) möglich.

Das Verfahren der Erfindung umfaßt somit eine Kombination folgender Arbeitsstufen:

- die Germanium und/oder Arsen enthaltende wäßrige Lösung wird mit Salzsäure versetzt, so daß eine Konzentration von mehr als 6 und vorzugsweise bis 10 mol/l HCl vorliegt;
- die derart erhaltene Lösung wird mit einer Flüssigmembran-Emulsion, welche aus einer feinstverteilten inneren wäßrigen Phase in einer organischen, mit der Lösung und der inneren Phase nicht mischbaren Membranphase besteht, in einem Extraktionsapparat in Kontakt gebracht;
- ein Volumenverhältnis von Germanium und/oder Arsen enthaltender Lösung zu Flüssigmembran-Emulsion von vorzugsweise 60 : 1 bis 500 : 1 sowie ein Volumenverhältnis von organischer Membranphase zu der inneren wäßrigen Phase von vorzugsweise 3 : 1 bis 1 : 2 wird eingestellt;
- die Flüssigmembran-Emulsion wird von der von Germanium und/oder Arsen befreiten Lösung abgetrennt;
- die Flüssigmembran-Emulsion wird durch Anlegen eines elektrischen Felds zwischen zwei außerhalb der Emulsion angeordneten, zweifach isolierten Elektroden gebrochen, wobei der Spannungsgradient größer als 0,2 kV/cm und eine Frequenz zwischen 50 Hz und 1000 Hz bei einer Spannung von 1 bis 20 kV eingestellt wird;
- die koaleszierte, germanium- und/oder arsenreiche innere wäßrige Phase wird abgezogen und
- die koaleszierte organische Phase wird zur Herstellung weiterer Flüssigmembran-Emulsion zurückgeführt.

Eine Beschleunigung der Elektrokoaleszenz kann in dem Verfahren der Erfindung durch die Wahl der Zusammensetzung des organischen Lösungsmittelgemischs der Membranphase erzielt werden. Durch den teilweisen Ersatz des zur Emulsionsherstellung z.B. verwendeten Kerosins durch ein aromatisches Lösungsmittel, wie Xylol, durch einen kurzkettigen Aliphaten, wie Hexan, oder durch einen Cycloaliphaten, wie Methylcyclohexan, kann die Brechungsgeschwindigkeit - das heißt im technischen Prozeß die Raum/Zeit-Ausbeute - erheblich gesteigert werden.

Das Verfahren gemäß der Erfindung weist gegenüber üblichen Verfahren eine Reihe von Vorteilen auf:

a) es gestattet eine vollkontinuierliche Betriebsweise im Vergleich zu diskontinuierlicher Betriebsweise bei Verwendung von z.B. festen Ionenaustauschern oder einem Fällungsreagenz wie Tannin;

b) eine Regenerierung der organischen Phase entfällt wie sie beispielsweise bei Extraktions/Reextraktions-Verfahren nach z.B. DE-A-24 23 355 erforderlich ist;

c) es erfolgt parktisch kein Verbrauch von organischem Lösungsmittel und anderen Chemikalien durch Germanium und/oder Arsen im Vergleich zu den unter a) und b) genannten Verfahrensweisen aufgrund eines sehr spezifischen hochselektiven physikalischen Transportvorgangs;

d) aufgrund des für Germanium und/oder Arsen sehr spezifischen physikalischen Transportvorgangs im Vergleich zu üblichen Verfahren wird eine stark erhöhte Raum/Zeit-Ausbeute erzielt;

e) aufgrund der stark erhöhten Raum/Zeit-Ausbeute wird eine wesentlich geringere Menge an Extraktionsmittel benötigt als bei üblichen Extraktions/Reextraktions-Verfahren mit z.B. Tetrachlorkohlenstoff.

Die Erfindung wird anhand der nachstehenden Beispiele näher und beispielhaft erläutert.

Beispiel 1

1200 ml einer Lösung, enthaltend 98 ppm Ge, 3235 ppm Cu, 6680 ppm Fe, 15 100 ppm Zn und 9 mol/l HCl, wurden in einem Rührreaktor mit 20 ml Emulsion, bestehend aus organischer Membranphase (10 ml einer Lösung aus 3 Vol.-% $CCl_4$, 0,5 Vol.-% eines PIBSA/Polyamin-Kondensationsproduktes in Mineralöl (Paranox® 100 der Esso Chemical), 24,2 Vol.-% Xylol und 72,3 Vol.-% Kerosin und darin emulgierter wäßriger Phase (10 ml $H_2O$), in Kontakt gebracht. Nach 5 min wurde das Rühren eingestellt. Die koaleszierte Emulsion wurde in ein Probengläschen überführt. Eine zweifach isolierte Stabelekotrode wurde in das Probengläschen zentriert eingetaucht, und das Probengläschen wurde mit einem Kupferblech, welches geerdet war, ummantelt. Bei einer Spannung von 16 kV bei 50 Hz brach die Emulsion.

Die Ge-Konzentration der inneren wäßrigen Phase betrug 11,6 g/l. Außer dem Ge waren keine anderen Metalle nachzuweisen. Die Endkonzentration der äußeren wäßrigen Phase betrug am Ende des Versuches 0,3 ppm. In der organischen Phase war kein Ge mehr vorhanden.

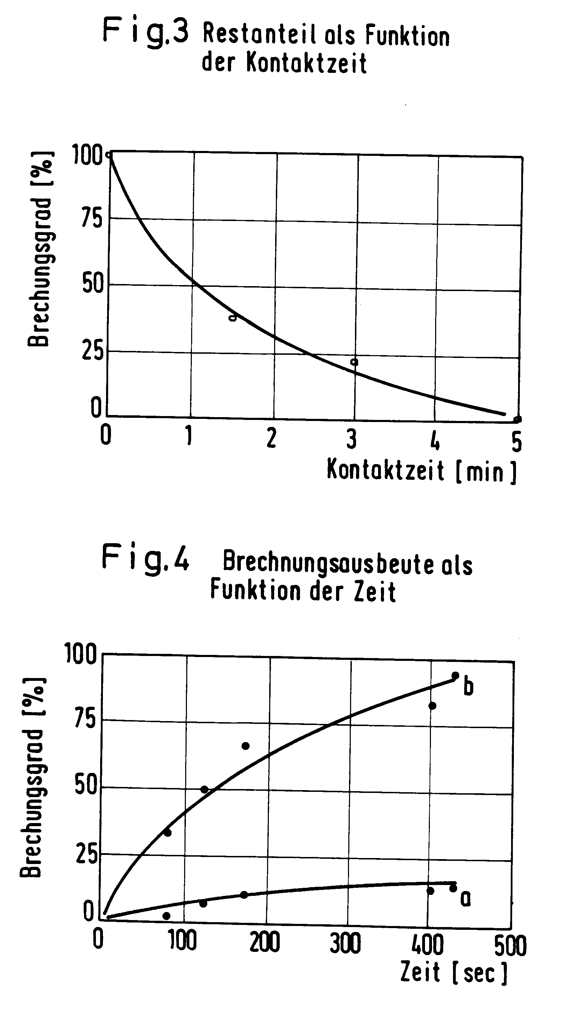

In Abb. 2 ist die Konzentrationsabnahme des Germaniums in der äußeren wäßrigen Phase als Funktion der Kontaktzeit dargestellt.

## Beispiel 2

Die eingesetzte Arsen-Lösung (1200 ml) enthielt 50 ppm As, 18 g/l Cu, 6 g/l Fe, 10 g/l Zn und 9 mol/l HCl. Diese wurde mit einer Emulsion, bestehend aus organischer Trennphase (10 ml einer Lösung aus 2 Vol.-% $CCl_4$, 0,6 Vol.-% Paranox® 100 (siehe Beispiel 1), 24,4 Vo.-% Xylol und 72,4 Vol.-% Kerosin) und emulgierter wäßriger Phase (10 ml $H_2O$), kontaktiert. Das Rühren wurde wieder nach 5 min eingestellt. Die gesammelte Emulsion wurde, wie in Beispiel 1 beschrieben, mit einer Spannung von 3 kV bei 1000 Hz gebrochen.

Die As-Konzentration der inneren wäßrigen Phase betrug 5,9 g/l. Außer dem As waren keine anderen Metalle in der angereicherten inneren Phase nachzuweisen. Die Endkonzentration der äußeren wäßrigen Phase betrug am Ende des Versuches 0,6 ppm. In der organischen Phase war kein Arsen mehr vorhanden.

In Abb. 3 ist die Konzentrationsabnahme des Arsens in der äußeren wäßrigen Phase als Funktion der Kontaktzeit dargestellt.

## Beispiel 3

In den Vorversuchen zur Brechung der beladenen Emulsionen wurde festgestellt, daß eine Emulsion, deren organische Phase aus 1,0 Vol.-% Paranox® 100, 1,0 Vol.-% $CCl_4$ und 98 Vol.-% Kerosin bestand, kaum gebrochen werden kann. Dagegen konnten die Emulsionen, deren organische Phase neben Kerosin auch Xylol enthielten, gut gebrochen werden. In Abb. 4 ist der die Brechung erheblich begünstigende Effekt durch den Zusatz von Xylol graphisch dargestellt. Kurve (a) zeigt das Verhalten einer Emulsion, die nur Kerosin als Lösungsmittel enthält, Kurve (b) gilt für eine Emulsion, die einen Xylolanteil von 24 Vol.-% besitzt.

## Beispiel 4

Zur Prüfung der Durchführbarkeit der elektrostatischen Brechung wurden 600 ml Emulsion hergestellt, bestehend aus 300 ml wäßriger Phase (pH = 4), die 6000 ppm Ge enthielt, und 300 ml einer organischen Phase, die sich aus 74,0 Vol.-% Kerosin, 1,0 Vol.-% $CCl_4$, 0,5 Vol.-% Paranox® 100 und 24,5 Vol.-% Xylol zusammensetzte. Die Emulgierdauer betrug 4 min.

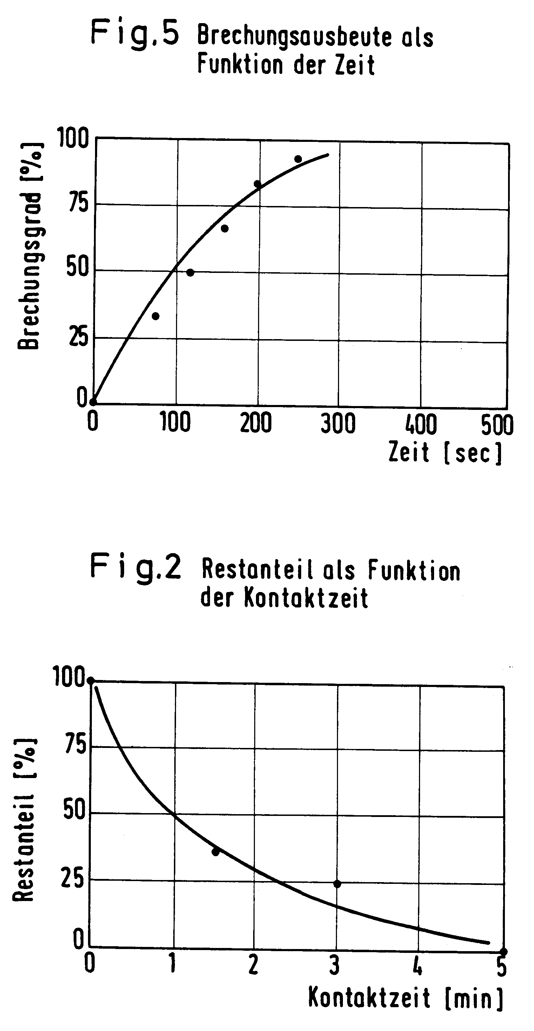

Die derart hergestellte Emulsion wurde in der Apparatur nach Abb. 1 gebrochen. Dazu wurde eine elektrisches Feld von 3 kV und 1000 Hz angelegt. Der zeitliche Verlauf der Brechung ist in Abb. 5 dargestellt. Eine nahezu vollständige Emulsionsbrechung wird nach ca. 5 min erzielt.

## Patentansprüche

1. Verfahren zur selektiven Gewinnung von Germanium und/oder Arsen aus wäßriger Lösung mittels "Flüssigmembran-Technik", wobei man die wäßrige Lösung des zu gewinnenden Stoffes mit einer Emulsion in Berührung bringt, deren Tröpfchen aus wäßriger innerer Phase von einer mit der wäßrigen Lösung nicht mischbaren, für den gelösten Stoff durchlässigen tensidhaltigen, organischen äußeren Phase umgeben sind, den gelösten Stoff durch die organische, tensidhaltige äußere Phase hindurchdringen läßt und in der wäßrigen inneren Phase undurchdringungsfähig macht, die Emulsion von der an gelöstem Stoff verarmten wäßrigen Lösung abtrennt, die Tröpfchen der wäßrigen inneren Phase in der abgetrennten Emulsion durch Anlegen eines elektrostatischen Feldes koalesziert, aus der koaleszierten wäßrigen inneren Phase den gelösten Stoff gewinnt und die verarmte innere Phase mit äußerer Phase reemulgiert und zurückführt, und wobei

   a) eine Germanium und/oder Arsen sowie gegebenenfalls noch weitere Metalle enthaltende wäßrige Lösung mit Salzsäure auf eine Konzentration von mehr als 6 und vorzugsweise bis 10 mol HCl/l eingestellt und die Metalle in Germaniumtetrachlorid und Arsentrichlorid überführt werden,
   b) eine äußere organische Phase der Flüssigmembran-Emulsion eingesetzt wird, die als Tensid ein Polyisobutylenbernsteinsäureanhydrid/Polyamin-Kondensationsprodukt enthält, und
   c) die innere wäßriger Phase der Flüssigmembran-Emulsion auf einen pH-Wert von 0 bis 14 eingestellt und das eindringende Germaniumtetrachlorid und/oder Arsentrichlorid undurchdringungsfähig gemacht wird unter der Maßgabe, daß die Zufuhr von Chlorionen ausgeschlossen wird.

2. Verfahren nach Anspruch 1, dadurch gekennzeichnet, daß ein Volumenverhältnis von organischer äußerer Phase zu wäßriger innerer Phase (der Flüssigmembran-Emulsion) von 10 : 1 bis 1 : 10 und vorzugsweise von 3 : 1 bis 1 : 2 eingestellt wird.

3. Verfahren nach den Ansprüchen 1 bis 2, dadurch gekennzeichnet, daß ein Volumenverhältnis von Germanium und/oder Arsen enthaltender salzsaurer wäßriger Lösung zu Flüssigmembran-Emulsion von 10 : 1 bis 1000 : 1 und vorzugsweise von 60 : 1 bis 500 : 1 eingestellt wird.

4. Verfahren nach den Ansprüchen 1 bis 3, dadurch gekennzeichnet, daß als organische äußere Phase ein mit Wasser nicht mischbares flüssiges Lösungsmittel oder Lösungsmittelgemisch verwendet wird aus der Gruppe

   gesättigte aliphatische Kohlenwasserstoffe,
   aromatische und cycloaliphatische Kohlenwasserstoffe,
   halogenierte aliphatische Kohlenwasserstoffe mit 1 bis 5 C-Atomen,
   halogenierte, flüssige einkernige aromatische Kohlenwasserstoffe.

5. Verfahren nach den Ansprüchen 1 bis 4, dadurch gekennzeichnet, daß als organische äußere Phase ein Lösungsmittelgemisch aus einem überwiegend geradkettigen Kohlenwasserstoff mit 16 bis 10 C-Atomen, einem halogenierten Kohlenwasserstoff mit 1 bis 5 C-Atomen und einem einkernigen aromatischen Kohlenwasserstoff verwendet wird.

6. Verfahren nach den Ansprüchen 1 bis 5, dadurch gekennzeichnet, daß die Flüssigmembran-Emulsion mit an Germanium und/oder Arsen angereicherter Phase durch Anlegen eines elektrischen Feldes zwischen zwei außerhalb der Emulsion isoliert angeordneten Elektroden gebrochen wird.

7. Verfahren nach den Ansprüchen 1 bis 6, dadurch gekennzeichnet, daß der Spannungsgradient größer als 0,2 kV/cm und eine Frequenz von 50 bis 1000 Hz bei einer Spannung von 1 bis 20 kV eingestellt wird.

8. Membranflüssigkeit zur Durchführung des Verfahrens nach einem oder mehreren der Ansprüche 1 bis 7, bestehend aus einem mit Wasser nicht mischbaren Lösungsmittelgemisch aus
   70 bis 75 Vol.-%
   eines überwiegend geradkettigen $C_{16}$- bis $C_{10}$-Kohlenwasserstoffs
   20 bis 25 Vol.-%
   eines aromatischen einkernigen Kohlenwasserstoffs
   1 bis 5 Vol.-%
   eines halogenierten $C_1$- bis $C_5$-Kohlenwas-

serstoffs
sowie mehr als 0,1 Gew.-%, vorzugsweise 0,5 bis 5 Gew.-%, eines öllöslichen Tensids auf Basis
Polyisobutylenbernsteinsäureanhydrid/Polyamin-Kondensationsprodukt, bezogen auf das Gewicht des Lösungsmittelgemischs.

9. Vorrichtung zur Durchführung der Koaleszenz in angereicherten, Germanium und/oder Arsen enthaltenden wäßrigen Lösungen gemäß dem Verfahren der Ansprüche 1 bis 7, gekennzeichnet durch
eine Emulsionsbrechungseinheit aus Brechungszelle (1) mit zwei an gegenüberliegenden Seiten außerhalb und im Bereich der Zellenwände angeordneten Elektroden (2) sowie Anschlußorganen (3) für elektrische Energie, wobei Elektroden (2) und Brechungszelle (1) in einem mit isolierendem Medium (5) angefüllten Behälter (4) angeordnet und von einem Faraday-Käfig (6) umgeben sind, Zuleitung (7) für den Emulsionszufluß in die Brechungszelle (1) und Abflußleitung (8) für Entnahme der koaleszierten Flüssigkeit und Überführung in einen Absetzbehälter (9), Entnahmeleitung (10) für metallreiche wäßrige Phase, Entnahmeleitung (11) für organische Membranphase sowie Rezirkulation (8a) nicht koaleszierter Emulsion aus dem Absetzbehälter (9) in die Brechungszelle (1).

**Claims**

1. Process for selectively recovering germanium and/or arsenic from an aqueous solution by means of "liquid membrane technology", wherein the aqueous solution of the substance to be recovered is brought into contact with an emulsion, the droplets consisting of the aqueous inner phase of which are surrounded by a surfactant-containing, organic outer phase which is immiscible with the aqueous solution and is permeable to the dissolved substance, the dissolved substance is allowed to penetrate through the organic, surfactant-containing outer phase and is rendered unable to penetrate in the aqueous inner phase, the emulsion is separated off from the aqueous solution which has been depleted in terms of the dissolved substance, the droplets of the aqueous inner phase in the separated emulsion are coalesced by applying an electrostatic field, the dissolved substance is recovered from the coalesced aqueous inner phase, and the depleted inner phase is re-emulsified with the outer phase and recycled, and wherein

a) an aqueous solution containing germanium and/or arsenic and also optionally further metals is adjusted with hydrochloric acid to a concentration of more than 6 and preferably up to 10 moles HCl/l and the metals are converted into germanium tetrachloride and arsenic trichloride,

b) an outer organic phase of the liquid membrane emulsion is used which contains as a surfactant a polyisobutylene succinic anhydride/polyamine condensation product, and

c) the inner aqueous phase of the liquid membrane emulsion is adjusted to a pH value of 0 to 14 and the entering germanium tetrachloride and/or arsenic trichloride is rendered unable to penetrate, with the proviso that the supply of chlorine ions is excluded.

2. Process according to Claim 1, characterised in that a volume ratio of organic outer phase to aqueous inner phase (of the liquid membrane emulsion) of 10 : 1 to 1 : 10 and preferably of 3 : 1 to 1 : 2 is set.

3. Process according to Claims 1 and 2, characterised in that a volume ratio of hydrochloric aqueous solution containing germanium and/or arsenic to the liquid membrane emulsion of 10 : 1 to 1000 : 1 and preferably of 60 : 1 to 500 : 1 is set.

4. Process according to Claims 1 to 3, characterised in that a liquid solvent or solvent mixture which is immiscible with water and is selected from the group:

   saturated aliphatic hydrocarbons,
   aromatic and cycloaliphatic hydrocarbons,
   halogenated aliphatic hydrocarbons with 1 to 5 C atoms,
   halogenated liquid mononuclear aromatic hydrocarbons,

   is used as the organic outer phase.

5. Process according to Claims 1 to 4, characterised in that a solvent mixture consisting of a predominantly straight-chained hydrocarbon with 16 to 10 C atoms, a halogenated hydrocarbon with 1 to 5 C atoms and a mononuclear aromatic hydrocarbon is used as the organic outer phase.

6. Process according to Claims 1 to 5, characterised in that the liquid membrane emulsion with the phase enriched in germanium and/or arsenic is broken by applying an electric field between two insulated electrodes disposed outside the emulsion.

7. Process according to Claims 1 to 6, characterised in that the voltage gradient in excess of 0.2 kV/cm and a frequency of 50 to 1000 Hz with a voltage of 1 to 20 kV is set.

8. Membrane liquid for carrying out the process according to one or more of Claims 1 to 7, consisting of a solvent mixture of

   70 to 75% by volume of a predominantly straight-chained $C_{16}$ to $C_{10}$ hydrocarbon,
   20 to 25% by volume of an aromatic, mononuclear hydrocarbon,
   1 to 5% by volume of a halogenated $C_1$ to $C_5$ hydrocarbon,

   which is immiscible with water, and more than 0.1% by weight, preferably 0.5 to 5% by weight, of an oilsoluble surfactant on the basis of polyisobutylene succinic anhydride/polyamine condensation product, relative to the weight of the solvent mixture.

9. Apparatus for effecting the coalescence in enriched aqueous solutions containing germanium and/or arsenic according to the process of Claims 1 to 7, characterised by an emulsion-breaking unit consist of a breaking cell (1) with two electrodes (2) disposed on opposite sides outside and in the region of the cell walls and also connection members (3) for electric power, the electrodes (2) and the breaking cell (1) being disposed in a container (4) filled with insulating medium (5) and being surrounding by a Faraday cage (6), a supply line (7) for supplying emulsion into the breaking cell (1) and a line (8) for withdrawing the coalesced liquid and transferring it into a settling tank (9), a line (10) for withdrawing metal-rich aqueous phase, a line (11) for withdrawing organic membrane phase and recirculating (8a) non-coalesced emulsion from the settling tank (9) into the breaking cell (1).

**Revendications**

1. Procédé d'obtention sélective de germanium et/ou d'arsenic, à partir d'une solution aqueuse au moyen de la "technique à membrane liquide", qui consiste à mettre la solution aqueuse de la substance à obtenir en contact avec une émulsion dont les gouttelettes de la phase aqueuse intérieure sont entourées d'une phase extérieure organique qui n'est pas miscible à la solution aqueuse, qui est perméable à la substance dissoute et qui contient un agent tensio-actif, à faire passer la substance dissoute à travers la phase extérieure organique qui contient un agent tensio-actif et, dans la phase intérieure aqueuse, à la rendre non susceptible de traverser, à séparer l'émulsion de la solution aqueuse appauvrie en la substance dissoute, à coalescer les gouttelettes de la phase intérieure aqueuse de l'émulsion séparée par application d'un champ électrostatique, à recueillir la substance dissoute de la phase intérieure aqueuse coalescée et à réémulsionner la phase intérieure appauvrie par de la phase extérieure et à la recycler, qui consiste :

a) à régler une solution aqueuse contenant du germanium et/ou de l'arsenic ainsi que, le cas échéant, d'autres métaux, par de l'acide chlorhydrique à une concentration supérieure à 6 et, de préférence, allant jusqu'à 10 moles d'HCl/litre, et à transformer les métaux en tétrachlorure de germanium et en trichlorure d'arsenic,

b) à utiliser une phase organique extérieure de l,émulsion formant membrane liquide qui contient, comme agent tensio-actif, un produit de condensation d'un poly(anhydride d'acide isobutylène succinique) et de polyamine, et

c) à régler le pH de la phase aqueuse intérieure de l'émulsion formant la membrane liquide à une valeur de 0 à 14, et à rendre le tétrachlorure de germanium et/ou le trichlorure d'arsenic qui y pénètre non susceptibles de traverser, sous la condition que tout apport d'ions chlore soit exclu.

2. Procédé suivant la revendication 1, caractérisé en ce qu'il consiste à établir un rapport en volume de la phase extérieure organique à la phase intérieure aqueuse (l'émulsion formant membrane liquide) de 10:1 à 1:10 et, de préférence, de 3:1 à 1:2.

3. Procédé suivant l'une des revendications 1 ou 2, caractérisé en ce qu'il consiste à établir un rapport en volume de la solution aqueuse chlorhydrique contenant du germanium et/ou de l'arsenic à l'émulsion formant la membrane liquide de 10:1 à 1000:1 et, de préférence, de 60:1 à 500:1.

4. Procédé suivant l'une des revendications 1 à 3, caractérisé en ce qu'il consiste à utiliser, comme phase extérieure organique, un solvant liquide non miscible à l'eau, ou un mélange de solvants choisis parmi

les hydrocarbures aliphatiques saturés,

les hydrocarbures aromatiques et cycloaliphatiques,

les hydrocarbures aliphatiques halogénés ayant de 1 à 5 atomes de carbone,

les hydrocarbures aromatiques monocycliques halogénés liquides.

5. Procédé suivant l'une des revendications 1 à 4, caractérisé en ce qu'il consiste à utiliser, comme phase extérieure organique, un mélange de solvants constitué d'un hydrocarbure principalement à chaîne linéaire ayant de 16 à 10 atomes de carbone, d'un hydrocarbure halogéné ayant de 1 à 5 atomes de carbone et d'un hydrocarbure aromatique monocyclique.

6. Procédé suivant l'une des revendications 1 à 5, caractérisé en ce qu'il consiste à casser l'émulsion formant la membrane liquide et ayant une phase enrichie en germanium et/ou en arsenic par application d'un champ électrique entre deux électrodes montées de manière isolée à l'extérieur de l'émulsion.

7. Procédé suivant l'une des revendications 1 à 6, caractérisé en ce qu'il consiste à établir un gradient de tension supérieur à 0,2 kV/cm et une fréquence de 50 à 1000 Hz pour une tension de 1 à 20 kV.

8. Liquide formant membrane pour la mise en oeuvre du procédé suivant l'une des revendications 1 à 7, constitué d'un mélange de solvants non miscibles à l'eau, composé :

- de 70 à 75 % en volume d'un hydrocarbure en $C_{16}$ à $C_{10}$ principalement linéaire,
- de 20 à 25 % en volume d'un hydrocarbure monocyclique aromatique,
- de 1 à 5 % en volume d'un hydrocarbure halogéné ayant de 1 à 5 atomes de carbone,

ainsi que de plus de 0,1 % en poids et, de préférence, de 0,5 à 5 % en poids d'un agent tensio-actif soluble dans l'huile à base d'un produit de condensation de poly(anhydride d'acide isobutylène succinique) et de polyamine, rapporté au poids du mélange de solvants.

9. Dispositif pour effectuer la coalescence dans des solutions aqueuses enrichies contenant du germanium et/ou de l'arsenic suivant le procédé des revendications 1 à 7, caractérisé

par une unité pour casser l'émulsion constituée d'une cellule de cassure (1) ayant deux électrodes (2) disposées sur les côtés opposés à l'extérieur et dans la région des parois de la cellule, ainsi que des organes de raccordement (3) pour de l'énergie électrique, les électrodes (2) et la cellule de cassure (1) étant disposées dans une cuve (4) emplie d'un milieu (5) isolant et étant entourées d'une cage de Faraday (6), un conduit d'amenée de l'émulsion dans la cellule de cassure (1) et un conduit d'évacuation (8) pour enlever le liquide coalescé et pour le transvaser dans une cuve de dépôt (9), un conduit de soutirage (10) pour la phase aqueuse riche en métal, un conduit de sortie (11) pour la phase organique formant membrane, ainsi qu'une recirculation (8a) d'émulsion non coalescée de la cuve de dépôt (9) à la cellule de cassure (1).

# Fig.1

# Fig.1a

EP 0 264 993 B1

# F i g.3 Restanteil als Funktion der Kontaktzeit

# F i g.4 Brechnungsausbeute als Funktion der Zeit

Fig.5 Brechungsausbeute als
Funktion der Zeit

Fig.2 Restanteil als Funktion
der Kontaktzeit